# EUROPÄISCHE PATENTSCHRIFT

(11) **EP 3 935 335 B1**
(45) Veröffentlichungstag und Bekanntmachung des Hinweises auf die Patenterteilung: **27.05.2026**
(21) Anmeldenummer: 20710109.8
(22) Anmeldetag: 05.03.2020
(51) Int. Cl.: F27D 3/15, B22D 43/00, C21B 3/04, C22B 21/00, C22B 9/16

(54) **VERFAHREN UND EINRICHTUNG ZUM ENTSCHLACKEN METALLURGISCHER SCHMELZEN**
METHOD AND INSTALLATION FOR REMOVING SLAG FROM METALLURGICAL MELTS
PROCÉDÉ ET DISPOSITIF DE DÉCRASSAGE DE FONTES MÉTALLURGIQUES

(30) Priorität: 08.03.2019 DE 102019106016; 08.03.2019 DE 102019106014
(43) Veröffentlichungstag der Anmeldung: 12.01.2022
(73) Patentinhaber: RIA Cast House Engineering GmbH, 04356 Leipzig (DE)
(72) Erfinder: ROTH, David, Downingtown, Pennsylvania 19335 (US); ROCKSTROH, Gerald, 04356 Leipzig (DE); ROCKSTROH, Michael, 04356 Leipzig (DE)
(74) Vertreter: Hecht, Jan-David
(86) Internationale Anmeldenummer: PCT/EP2020/055868
(87) Internationale Veröffentlichungsnummer: WO 2020/182616

(56) Entgegenhaltungen:
- EP-A1- 0 922 515
- JP-A- H07 197 141

## Beschreibung

Die vorliegende Erfindung betrifft ein Verfahren zum Entschlacken metallurgischer Schmelzen nach dem Oberbegriff von Anspruch 1 und eine Einrichtung zum Entschlacken metallurgischer Schmelzen nach dem Oberbegriff von Anspruch 5.

Metallurgische Schmelzen werden erzeugt, um Metalle bzw. Legierungen mit möglichst hoher Reinheit zu gewinnen. Dabei können sowohl Rohmaterialien als auch Recyclingmaterialien verwendet werden. Solche metallurgische Schmelzen werden beispielsweise in Schmelz- oder Gießöfen, aber auch in Pfannen erzeugt.

Beim Erschmelzen von Metallen aus ihren Erzen, ebenso wie beim Schmelzen von Metallen oder deren Legierungen unter atmosphärischem oder technologisch bedingtem Einfluss, entstehen Schlacken, die auch je nach Schmelztechnik und Ausgangsmaterial Krätze (englisch: "Dross"), Gekrätz, Asche bzw. bei größerer Sauerstoffbedingter Oxidation Abbrand genannt werden. Diese Schlacken können neben oxidischen Produkten auch dem Schmelzgut primär anhaftende Verunreinigungen oder prozessbedingte Reaktionsprodukte enthalten.

Schmelzen müssen daher vor der Weiterverwendung von solchen Schlacken befreit, also "entschlackt" (auch "abgekrätzt" "entascht" genannt) werden. Dabei besteht die Problematik, dass diese Schlacken zwar von geringerer Dichte sind und damit auf der Schmelze aufschwimmen, aber einen höheren Schmelzpunkt aufweisen, als die Schmelze selbst, weshalb die der Schmelze aufliegende Schlacke in der Regel hochviskos ist, was den Einschluss von Schmelzbestandteilen in der Schlacke begünstigt. Dadurch geht mit der Bildung von Schlacken stets ein Verlust an Schmelze einher.

Es gibt verschiedene Methoden, um die Schlacke von der Schmelze zu entfernen.

Die DE 39 28 671 C2 beschreibt eine Methode, bei der ein Schmelzofen eine Barriere für Schlacke aufweist und die Schlacke regelmäßig mittels eines Schlackeschiebers und unter Kippung des gesamten Ofens, wodurch die Schmelze sich von der Schlacke trennt, abgezogen wird. Alternativ zu dem Schlackeschieber und der Kippung kann auch ein eine Schwimmfähige Hubeinrichtung im Zusammenspiel mit einer Schlackenpalette verwendet werden, um die Schlacke automatisch bei Öffnung der Ofentür in einen Schlackenbehälter (auch "Kübel" genannt) zu überführen. Zum Sammeln der Schlacke hinter der Barriere wird jeweils ein elektromagnetischer Rührer zur Erzeugung einer Strömung eingesetzt. Hiermit lassen sich allerdings nur kleine Schmelzöfen betreiben.

Die DE 197 29 702 A1 beschreibt eine Methode für große Schmelzöfen, bei der die auf der Schmelze aufschwimmende Schlacke mittels einer Vorrichtung zum Abziehen der Schlacke in der Form eines Abziehschildes, der an einem langen verfahrbaren Arm angeordnet ist, von der Schmelze abgezogen und auf der Chargierseite des Schmelzofens über die Brücke des Schmelzofens in einen Schlackebehälter überführt wird. Anschließend versucht man, zumindest einen Teil der in der Schlacke gebundenen Schmelze zurückzugewinnen.

EP 0 922 515 A1 beschreibt eine Vorrichtung zum automatischen Austrag von auf flüssigem Metall schwimmender Krätze aus einem Abkrätztrog, durch Abziehen der Krätze mittels einer teilweise in das flüssige Metall eintauchenden Platte. Die in Abzugsrichtung (x) verfahrbare Platte ist kammartig ausgebildet und der Abkrätztrog weist auf seiner Austragsseite eine schräg verlaufende Trogwand auf, als Abstreiffläche für die Platte.

Im Fall der Herstellung von Aluminiumschmelzen stellt sich die Situation wie folgt dar:
Aluminium ist einer der wichtigsten Rohstoffe für innovative Industriezweige wie die Luft- und Raumfahrt sowie den Fahrzeugbau. Am grundsätzlichen Herstellungsprinzip aus dem Aluminiumerz Bauxit hat sich seit Ende des 19. Jahrhunderts nichts geändert. Mittels Elektrolyse wird es nach dem sogenannten "Hall Héroult Prozess" bei 960 °C gewonnen. Die Gewinnung von Aluminium aus Erz hat große Nachteile, da problematische Reststoffe wie Rotschlamm anfallen. Weiterhin ist die Herstellung von Aluminium sehr energieintensiv. Recyceltes Aluminium hingegen braucht bei der Herstellung lediglich 5 % der Energie gegenüber der Gewinnung aus Erz. Außerdem fallen hierbei kaum noch giftige Rückstände an.

Das zu recycelnde Aluminium wird in Schmelzöfen eingeschmolzen und zu unterschiedlichen Halbzeugen abgegossen. Beim Einschmelzen von Aluminium entstehen durch Verunreinigungen, punktuelle Überhitzungen und der Oxidschicht auf dem Ausgangsmaterial, Metallverluste - die Aluminiumkrätze. Allein in Deutschland entstehen so jährlich ca. 40.000 Tonnen Metallverluste. Die Aluminiumkrätze besteht im Wesentlichen aus Aluminiumoxid und Aluminium. Der Metallgehalt der Aluminiumkrätze beläuft sich auf 50 - 70 %. Das Aluminium ist dabei im Al2O3 Gerüst wie in einem Schwamm gebunden.

Die Aluminiumkrätze schwimmt auf dem Schmelzbad. An dieser Stelle hat die Aluminiumkrätze eine isolierende Wirkung und verhindert den weiteren Wärmeeintrag in das Schmelzbad. Weiterhin neigt Aluminiumkrätze, bei der Verfügbarkeit von ausreichend Sauerstoff, zum Brennen. Aus den genannten Gründen ist es also erforderlich, die Aluminiumkrätze abzuziehen und vom Schmelzbad zu entfernen. Für das Entkrätzen werden üblicherweise Entkrätzmaschinen verwendet. Die Entkrätzmaschine wird vor dem geöffneten Schmelzofen positioniert und ein beweglicher Arm mit einem Schild fährt in den Schmelzofen. Das Schild wird leicht in das Schmelzbad getaucht und die Aluminiumkrätze wird sukzessive in Richtung der Ofenöffnung gezogen und zunächst auf der Ofenschwelle ("Brücke") abgelegt. Das Ziel des Ablegens ist es, dass ein Teil des flüssigen Aluminiums wieder in den Schmelzofen zurückfließt. Anschließend wird die Aluminiumkrätze in Kübel vor dem Schmelzofen gezogen.

Zur weiteren Verarbeitung von Aluminiumkrätze gibt es unterschiedliche Verfahren. Alle Verfahren haben das Ziel, durch schnelles Abkühlen Krätzebrände zu unterbinden und den Metallgehalt in der Aluminiumkrätze somit zu erhalten.

Das verbreitetste Verfahren ist das Krätzepressen mittels einer separaten Presse. Beim Krätzepressen wird die in dem Kübel befindliche Aluminiumkrätze mit einem hydraulischen Pressstempel komprimiert. Neben dem Effekt des Abkühlens sammelt sich das erstarrende Aluminium zu kleineren Platten. In weiteren Arbeitsgängen wird das Aluminium vom Aluminiumoxid mechanisch getrennt und kann wieder eingeschmolzen werden, so dass bis zu 60 % des Krätzeaufkommens wieder als Aluminium dem Produktionskreislauf zugeführt werden können.

In Anlehnung an das Krätzepressen werden passende Gussdeckel auf Krätzepfannen gelegt. Dies hat zum Ziel, durch die Wärmekapazität des Deckels, die Aluminiumkrätze zu kühlen und eventuelle Brände durch das Abschneiden der Sauerstoffzufuhr zu unterbinden. Die Weiterverarbeitung der kalten Aluminiumkrätze erfolgt analog zum Krätzepressen.

Ein weiteres Verfahren zur Behandlung von Aluminiumkrätze ist die Inertgas Kühlung. Dafür wird die Krätzepfanne in eine verschließbare Kammer gestellt und durch die Zugabe von Inertgas gekühlt und Krätzebrände werden erstickt. Die Weiterverarbeitung erfolgt analog zum Krätzepressen.

All diese Verfahren verhindern Krätzebrände und tragen zur Rückgewinnung von Aluminium aus der Aluminiumkrätze bei, jedoch benötigen sie aufwendige Spezialanlagen und sind sehr zeitintesiv.

Es ist daher Aufgabe der vorliegenden Erfindung, eine Methode zur Rückgewinnung von Metallen aus der Schlacke beim Herstellen metallurgischer Schmelzen bereitzustellen, die weniger aufwendig und weniger zeitintensiv ist. Insbesondere sollen sich damit Aluminiumkrätzen schneller und kostengünstiger behandeln lassen.

Diese Aufgabe wird gelöst mit einem Verfahren zum Entschlacken nach Anspruch 1 und einer Einrichtung zum Entschlacken nach Anspruch 5. Vorteilhafte Weiterbildungen sind in den abhängigen Unteransprüchen und der Beschreibung angegeben. Auch wenn es verschiedene Begriffe gibt, soll im Rahmen der vorliegenden Erfindung einheitlich ganz allgemein von "Schlacke" bzw. "Entschlacken" und "Schmelzofen" gesprochen werden.

Erfinderseits wurde erkannt, dass die gestellte Aufgabe dadurch in überraschender Art und Weise besonders einfach gelöst werden kann, wenn die Schlacke noch vor dem Überführen in einen Schlackebehälter gepresst wird, weil dann die Schlacke noch nicht erkaltet ist und besser gepresst werden kann. Dadurch wird der Pressvorgang weniger aufwendig. Außerdem kann so aus der Schlacke gepresstes Metall direkt in die Schmelze des Schmelzofens zurückfließen, wodurch die Arbeitszeit deutlich reduziert werden kann. Außerdem kühlt die Schlacke schon während des Pressvorgangs ab, so dass dadurch Schlackebrände wirksam verhindert werden können.

Das erfindungsgemäße Verfahren zum Entschlacken metallurgischer Schmelzen gemäß Anspruch 1, wobei die Schlacke von der Schmelze abgezogen wird, zeichnet sich somit dadurch aus, dass die Schlacke vor dem Überführen in einen Schlackebehälter gepresst wird.

Die Schlacke wird mit einer zum Abziehen der Schlacke eingesetzten Abziehvorrichtung im Ofen gepresst. Das Verfahren ist dann besonders einfach durchführbar, weil keine gesonderte, außerhalb des Ofens liegende Pressvorrichtung erforderlich ist. Die Formulierung "im Ofen" schließt dabei auch äußere Bereiche des Ofens mit ein, wie beispielsweise eine Ofenbrücke.

Die Schlacke wird zwischen der Abziehvorrichtung und einem Gegenlager gepresst. Dann ist der Pressvorgang konstruktiv besonders einfach umsetzbar.

In einer vorteilhaften Weiterbildung ist vorgesehen, dass beim Pressen aus der Schlacke austretendes geschmolzenes Material der Schmelze zugeführt wird. Dadurch wird die Arbeitszeit deutlich reduziert, weil ein erneutes Zuchargieren des rückgewonnen Metalls entfallen kann.

In einer vorteilhaften Weiterbildung ist vorgesehen, dass die Schlacke beim Auspressen auf einer Brücke eines Schmelzofens aufliegt, wobei der Pressvorgang bevorzugt unmittelbar nach Abziehen der Schlacke auf die Brücke begonnen wird. Dadurch kann das rückgewonnene Metall der Schmelze zugeführt werden und zugleich wird durch die Brücke der Widereintrag von abgezogener Schlacke in die Schmelze unterbunden.

Selbständiger Schutz wird beansprucht für die erfindungsgemäße Einrichtung zum Entschlacken metallurgischer Schmelzen, wobei die Einrichtung angepasst ist, Schlacke von der Schmelze abzuziehen, wobei die Einrichtung Mittel zum Abziehen der Schlacke von der Schmelze aufweist, wobei die Einrichtung Mittel zum Pressen aufweist, die angepasst sind, die Schlacke vor dem Überführen in einen Schlackebehälter zu pressen. Die Einrichtung besteht separat von dem Schmelzofen, und ein Gegenlager besteht als Teil der Einrichtung so, dass die Schlacke zwischen den Mittel zum Abziehen der Schlacke und einem Gegenlager auspressbar ist.

In einer vorteilhaften Weiterbildung ist vorgesehen, dass die Mittel zum Pressen zumindest auf einer der Flächen, die die Schlacke zwischen sich pressen, eine Oberflächenstruktur, bevorzugt mit Erhebungen und Vertiefungen, höchst bevorzugt mit Waffeleisenform, insbesondere mit parallel verlaufenden Gräben und Tälern und/oder mit schachbrettartig angeordneten Erhöhungen und Vertiefungen und/oder mit sich kreuzenden Stegen und/oder mit sich kreuzenden Nuten aufweisen. Durch diese Oberflächenstruktur werden lokale Druckspitzen erzeugt, die den Pressvorgang und damit das Auspressen des Metalls aus der Schlacke verbessern.

In einer vorteilhaften Weiterbildung ist vorgesehen, dass die Einrichtung angepasst ist, das erfindungsgemäße Verfahren auszuführen.

In einer vorteilhaften Weiterbildung ist vorgesehen, dass die Mittel zum Abziehen Teil der Mittel zum Pressen sind. Dadurch ist die Einrichtung besonders einfach aufgebaut.

In einer vorteilhaften Weiterbildung ist vorgesehen, dass die Mittel zum Abziehen ein Abziehschild aufweisen, dem ein Gegenschild zugeordnet ist, so dass die Schlacke zwischen Abziehschild und Gegenschild auspressbar ist. Dadurch lässt sich der Auspressvorgang besonders einfach und schnell bewirken.

In einer vorteilhaften Weiterbildung ist vorgesehen, dass das Abziehschild und das Gegenschild jeweils Unterkanten aufweisen, wobei die Unterkante des Abziehschildes beim Pressen in gleicher Höhe oder oberhalb der Unterkante des Gegenschildes angeordnet ist, so dass aus der Schlacke austretendes geschmolzenes Material unter dem Abziehschild abgeleitet wird. Dadurch kann das geschmolzene Material besonders einfach wieder der Schmelze zugeführt werden. Da die Ofenbrücke in der Regel ein leichtes Gefälle (2°-3°) aufweist, lässt auch die Anordnung in gleicher Höhe ein Abfließen des geschmolzenen Materials zu.

In einer vorteilhaften Weiterbildung ist vorgesehen, dass die Mittel zum Pressen zumindest auf einer der Flächen, die die Schlacke zwischen sich pressen, ein oder mehrere Führungen zum Ableiten des aus der Schlacke austretenden geschmolzenen Materials aufweist, wobei die Führungen bevorzugt als Durchbrechungen in der Fläche ausgebildet sind, wobei die Führungen insbesondere in dem Abziehschild angeordnet sind. Auch dadurch kann das geschmolzene Material besonders einfach wieder der Schmelze zugeführt werden.

In einer vorteilhaften Weiterbildung ist vorgesehen, dass das Abziehschild und/oder das Gegenschild kühlbar ausgebildet sind. Dadurch können diese Schilde beim Pressen und Auswerfen der Schlacke gekühlt werden, wodurch die Anhaftung der Schlacke an den Schilden verringert und damit die Ablösbarkeit der Schlacke verbessert wird. Entsprechende Mittel zur Kühlung können elektrisch aktivierbar, beispielsweise mit Hilfe eines Peltier-Elements, oder mit einem Kältemittelkreislauf üblicher Art und Weise mit einem entsprechenden Kältefluid ausgebildet sein.

In einer vorteilhaften Weiterbildung ist vorgesehen, dass die Mittel zum Pressen Auswerfer zum Ablösen der Schlacke von den Mitteln zum Pressen aufweisen, wobei die Auswerfer bevorzugt als Stößel ausgebildet sind, die insbesondere an dem Abziehschild und/oder dem Gegenschild angeordnet sind. Dadurch wird die ausgepresste Schlacke sehr einfach wieder von den Mitteln zum Pressen gelöst, so dass sie schnell in Schlackbehälter überführt werden kann und nicht wieder in die Schmelze zurückbefördert wird.

In einer vorteilhaften Weiterbildung ist vorgesehen, dass die Einrichtung verfahrbar gegenüber einem Untergrund der Einrichtung ausgebildet ist. Dadurch können mehrere Schmelzöfen nacheinander bedient werden und außerdem kann die Chargieröffnung eines Schmelzofens schnell freigegeben werden.

In einer vorteilhaften Weiterbildung ist vorgesehen, dass die Mittel zum Auspressen vertikal anhebbar und/oder horizontal verlagerbar ausgebildet sind. Dadurch kann ein einfaches Manövrieren in Bezug auf einen Schmelzofen erfolgen.

Die Kennzeichen und weitere Vorteile der vorliegenden Erfindung werden im Folgenden anhand der Beschreibung eines bevorzugten Ausführungsbeispiels im Zusammenhang mit den Figuren deutlich. Dabei zeigt rein schematisch:
- Fig. 1: eine perspektivische Ansicht der erfindungsgemäßen Einrichtung im Zusammenspiel mit einem Schmelzofen,
- Fig. 2: die erfindungsgemäße Einrichtung nach Fig. 1 im Zusammenspiel mit dem Schmelzofen in einer Schnittansicht in einem ersten Betriebszustand (vor dem Ofen, Ofen geschlossen),
- Fig. 3: die erfindungsgemäße Einrichtung nach Fig. 1 im Zusammenspiel mit dem Schmelzofen in einer Schnittansicht in einem zweiten Betriebszustand (Ofen offen und Abziehschild maximal nach innen),
- Fig. 4: die erfindungsgemäße Einrichtung nach Fig. 1 im Zusammenspiel mit dem Schmelzofen in einer Schnittansicht in einem dritten Betriebszustand (Ofen offen und Abziehschild und Gegenschild pressen Schlacke auf Brücke),
- Fig. 5: die erfindungsgemäße Einrichtung nach Fig. 1 im Zusammenspiel mit dem Schmelzofen in einer Schnittansicht in einem vierten Betriebszustand (Ofen offen und Abziehschild und Gegenschild außerhalb, Schlacke fällt in Kübel) und
- Fig. 6: eine perspektivische Ansicht auf Abziehschild und Gegenschild.

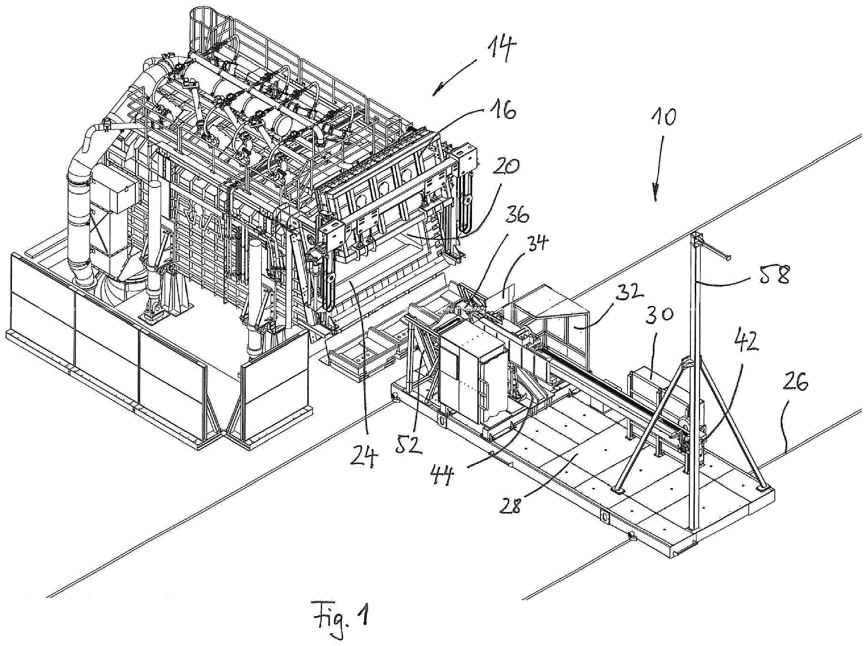

Es ist in den Fig. 1 bis 5 zu erkennen, dass die erfindungsgemäße Einrichtung 10 zum Entschlacken von Schmelzen 12 mit einem Schmelzofen 14 zusammenwirkt, der als Herdschmelzofen ausgebildet ist und einen von einer vertikal verfahrbaren Ofentür 16 schließbaren Schmelzbereich 18 mit einer Chargieröffnung 20, einer Ofenrampe 22 und einer Ofenbrücke 24 aufweist.

Die Entschlackeinrichtung 10 weist dabei eine auf Schienen 26 seitlich an dem Schmelzofen 14 vorbei verfahrbare Basis 28 auf, auf der Steueranlagen 30 und ein Bedienstand 32 mit einer Hitzeabschirmung 34 angeordnet sind.

Weiterhin sind auf der Basis 28 Mittel 36 zum Abziehen angeordnet, die einen teleskopbierbaren Mast oder Ausleger 38 aufweisen und einen daran befestigten Abziehschild 40. Das Abziehschild 40 weist Durchbrechungen (nicht gezeigt) auf, die das Abziehschild 40 vollständig durchdringen also von dem Gegenschild 48 zugewandten Seite zum Schmelzbereich 18 hindurchreichen.

Für den Antrieb der Ausfahr-und Einziehbewegung des teleskopbierbaren Mastes oder Auslegers 38 sind erste steuerbare Mittel 42 bestimmt. Für die vertikale Verlagerung des Mastes oder Auslegers 38 sind zweite steuerbare Mittel 44 bestimmt. Diese Mittel 42, 44 können beispielsweise als Hydraulikmittel ausgebildet sein. Allerdings ist auch eine rein elektrische Ausbildung möglich. Wichtig ist nur, dass sowohl die Eindringtiefe des Abziehschildes 40 in den Ofen 14, als auch die vertikale Höhe des Abziehschildes 40 über der Schmelze 12 einstellbar sind.

Weiterhin ist das Abziehschild 40 Bestandteil der Mittel 46 zum Pressen, die zusätzlich einen Gegenschild 48 aufweisen, der an einem weiteren teleskopbierbaren Arm 50 angeordnet sind. Dieser Arm 50 ist ebenfalls beispielhaft hydraulisch betätigt, wobei die vertikale Höhe über eine Parallelogrammführung 52 und hydraulische Mittel 54 und die Ausfahr-und Einziehbewegung des teleskopbierbaren Arms 50 steuerbare hydraulische Mittel 56 vorgesehen sind. Auch hier könnten die hydraulischen Mittel 54, 56 auch rein elektrisch ausgebildet sein. Wichtig ist dabei, dass sowohl die Eindringtiefe des Gegenschildes 48 in den Ofen 14, als auch die vertikale Höhe des Gegenschildes 48 über der Ofenbrücke 24 einstellbar sind.

Die Steuerung von Abziehschild 40 und Gegenschild 48 erfolgt durch einen Bediener (nicht gezeigt) auf dem Bedienstand 32 im Zusammenhang mit den Steueranlagen 30, die ihre Energie über eine Energiezuleitung (nicht gezeigt) erhalten, die an der Basis 28 an einen Baum 58 befestigt ist, damit sie nicht in die Schienen 26 geraten kann.

Zum Ableiten der Schlacke 60 in den bereitstellbaren Schlackebehälter 62 (Kübel) sind Ableitmittel 64 seitlich an der Ofenbrücke 24 angeordnet.

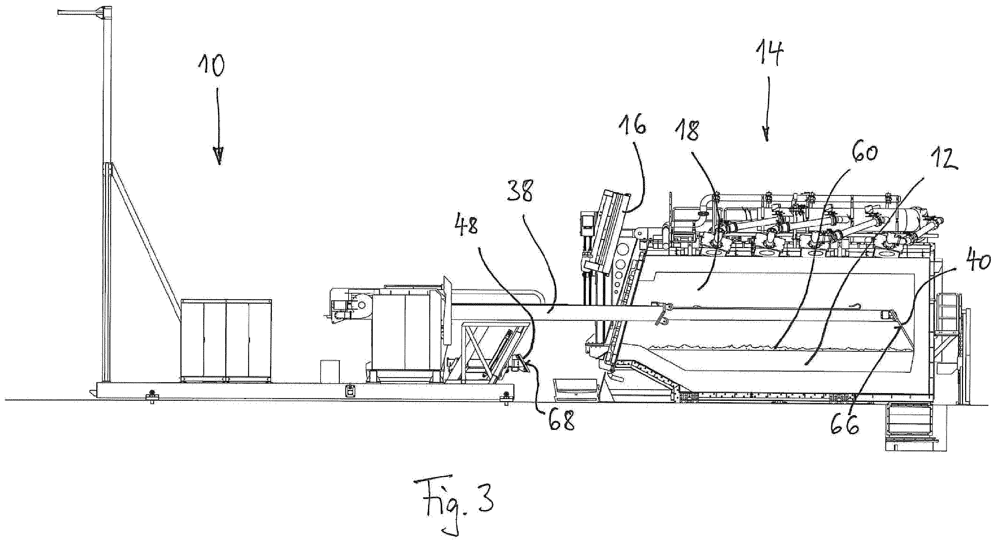

Zusätzlich können im Abziehschild 40 und/oder im Gegenschild 48 Mittel (nicht gezeigt) zum Entfernen anhaftender Schlacke 60' vorgesehen sein, die beispielsweise als aktivierbare Dorne, Stößel oder dgl. Auswerfer ausgebildet sind, die bedarfsweise vom Inneren des Abziehschildes 40 bzw. des Gegenschildes 48 über die Pressflächen 66 bzw. 68 (vgl. Fig. 3) hinaustreten können und so die Schlacke 60' abstoßen könnten.

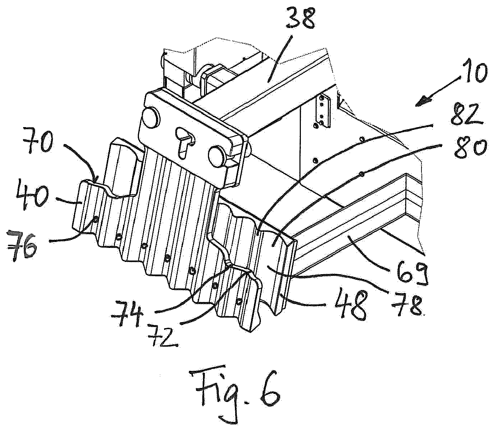

Außerdem können Mittel (nicht gezeigt) zur Kühlung von Abziehschild 40 und/oder Gegenschild 48 vorgesehen sein, wodurch diese Schilde 40, 48 jeweils kühlbar ausgebildet sind. In dem dargestellten Beispiel der Fig. 6 ist nur das Gegenschild 48 luftkühlbar ausgebildet, wobei gekühlte Druckluft über Leitungen 69 geführt und durch Kanäle (nicht gezeigt) in dem Gegenschild 48 geleitet wird. In Fig. 6 sind die Mittel 46 zum Pressen zur Verbesserung der Übersichtlichkeit nicht gezeigt.

In Fig. 6 ist zu erkennen, dass die Pressfläche 66 des Abziehschildes 40 eine Oberflächenstruktur 70 mit waffelartig angeordneten Erhöhungen 72 und Senken 74 aufweist. Zusätzlich sind Durchbrechungen 76 in der Pressfläche 66 vorgesehen, die das Abziehschild 40 vollständig durchdringen.

Die in Fig. 6 erkennbare Pressfläche 68 des Gegenschildes 48 ist mit einer Oberflächenstruktur 78 versehen, die komplementär zur Oberflächenstruktur 70 des Abziehschildes 40 ausgebildet ist, so dass Erhöhungen 72 im Abziehschild 40 auf Senken 80 im Gegenschild und Senken 74 im Abziehschild 40 auf Erhöhungen 82 im Gegenschild 48 treffen. Dadurch wird eine besonders gute Druckverteilung erreicht, bei der sich lokal in den Übergängen von Erhöhungen 72, 82 und Senken 74, 80 Druckspitzen ausbilden, die für ein besonders gutes Pressen sorgen.

Das erfindungsgemäße Verfahren wird nun wie folgt ausgeführt.

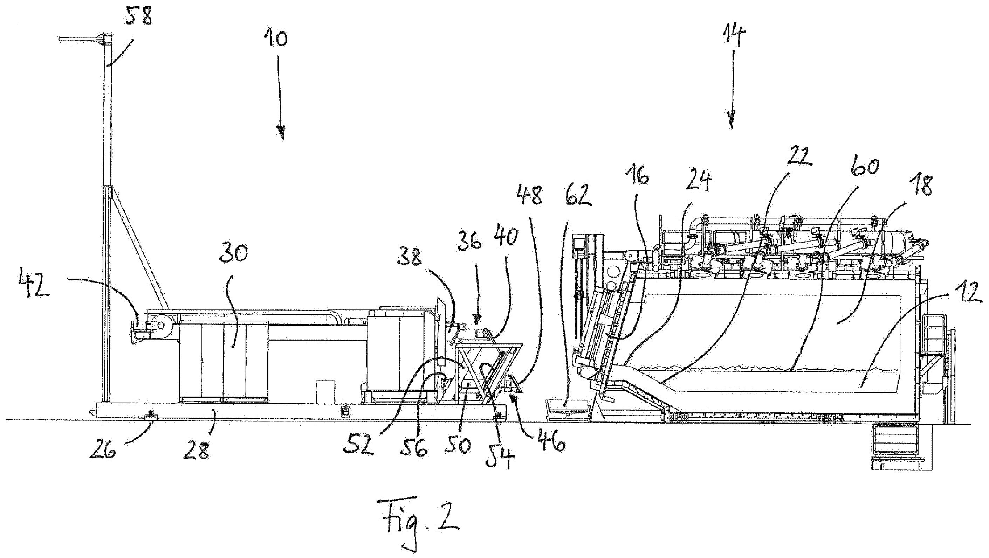

Mit einer nicht dargestellten Chargiervorrichtung wird der Schmelzofen 14 mit Ausgangsmaterial beschickt und die Ofentür 16 geschlossen. Nach vollständiger Ausbildung der Schmelze 12 wird die Einrichtung 10 mittels der Schienen 26 vor der Ofentür 16 platziert und es wird die Ofentür 16 geöffnet (vgl. Fig. 2).

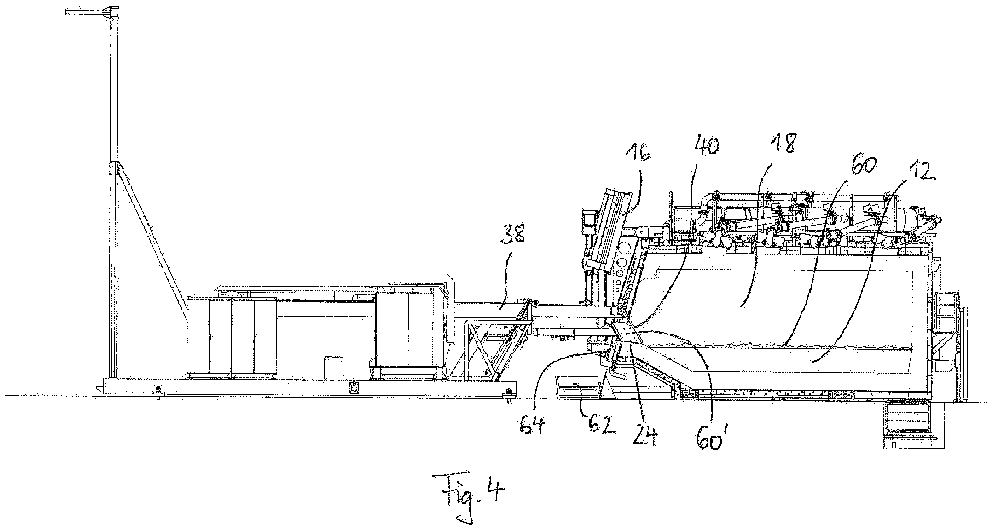

Anschließend wird das Abziehschild 40 mit dem teleskopierbaren Mast 38 in den Schmelzbereich 18 eingeführt (vgl. Fig. 3) und Anteile 60' der Schlacke 60 über die Ofenrampe 22 auf die Ofenbrücke 24 gezogen und gegen das Gegenschild 48 gepresst. Zuvor wird das Gegenschild 48 mit dessen Unterkante auf der Ofenbrücke 24 abgelegt (vgl. Fig. 4).

Alternativ kann auch erst ein großer Teil bzw. der gesamte Schmelzbereich 18 des Schmelzofens 14 von Schlacke 60 befreit werden, wobei die Schlacke 60' auf der Ofenbrücke 24 abgelegt wird, und erst anschließend erfolgt das Auspressen.

Durch den Druck beim Auspressen zwischen Abziehschild 40 und Gegenschild 48 tritt das in der Schlacke 60' enthaltene geschmolzene Material aus und durchtritt das Abziehschild 40 durch die Durchbrechungen 76, so dass es in die Schmelze 12 zurückbefördert wird. Außerdem fließt geschmolzenes Material in den Rinnen, die durch die gegenläufigen Erhöhungen 72, 82 und Senken 74, 80 gebildet werden, nach unten in Richtung zur Ofenbrücke 24 und von da in Schmelze 12 ab.

Dabei wirkt das Gegenschild 48 als Barriere, so dass weder geschmolzenes Material noch Schlacke 60' über die Brücke 24 aus dem Schmelzofen 14 herausgelangen kann. Das Abziehschild 40 wiederum verhindert ein Zurückgelangen der Schlacke 60' in den Schmelzbereich 18.

Zusätzlich kann die Unterkante des Abziehschildes 40 gegenüber der Ofenbrücke 24 soweit angehoben werden, dass flüssiges Metall zwischen Abziehschild 40 und Ofenbrücke 24 in die Schmelze 12 zurückfließen kann, ohne dass Schlacke 60' in die Schmelze 12 beim Pressen befördert wird. Dabei liegt die Unterkante des Gegenschildes 48 auf der Ofenbrücke 24 auf, um eine Abdichtung gegenüber dem geschmolzenen Material zu bewirken. Aufgrund der Neigung der Ofenbrücke 24 reicht hierzu, dass sich die Unterkante des Abziehschildes 40 auf derselben Höhe befindet wie die Unterkante des Gegenschildes 48.

Es ist in den Fig. 4 und 6 zu erkennen, dass das Abziehschild 40 und das Gegenschild 48 planparallel zueinander angeordnet sind und zwar mit einer Neigung nach unten in Richtung des Schmelzbereichs 18, wodurch die Ableitung des flüssigen Metalls, das aus der Schlacke 60' ausgepresst wird, in die Schmelze 12 hinein befördert wird.

Es könnte aber anstelle einer planparallelen Anordnung beispielsweise auch eine Anordnung gewählt werden, bei der der Abstand zwischen Abziehschild 40 und Gegenschild 48 sich nach oben verjüngt, so dass der Druck nach unten wirkt und dadurch die Schlacke 60' bzw. das geschmolzene Material nicht nach oben austritt.

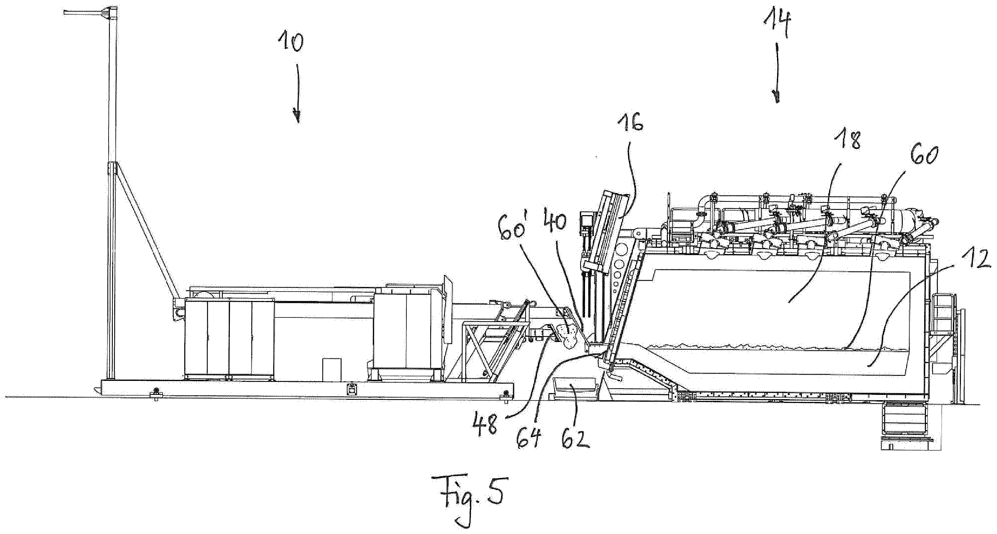

Anschließend wird das Gegenschild 48 vom Schmelzofen 14 weggezogen und die ausgepresste Schlacke 60' mittels des Abziehschildes 40 über die Ableitmittel 64 in den Schlackebehälter 62 befördert (vgl. Fig. 5). Dabei können die Mittel zum Auswerfen der Schlacke 60' in Abziehschild 40 und Gegenschild 48 aktiviert werden, um die Schlacke 60' besser von den Schilden 40, 48 zu lösen. Dieses Ablösen kann auch dadurch befördert werden, dass die Mittel zur Kühlung von Abziehschild 40 und/ oder Gegenschild 48 zumindest beim Auswerfen, aber bevorzugt schon vom Pressen aktiviert werden.

Alternativ oder zusätzlich könnten die Pressflächen 66, 68 auch mit einer Antihaftbeschichtung (Schlichte) für die Schlacke versehen sein, die beispielsweise aus Graphitpaste oder Bornitrit besteht.

Dieser Vorgang wird wiederholt, bis der Schmelzofen 14 vollständig entschlackt ist, wobei dieser Vorgang bei üblichen Schmelzöfen 14 mit einem Fassungsvermögen von 35 bis 60 t 15 min bis 20 min dauert. Dabei kann der Arbeitsaufwand durch Verwendung breiterer Abziehschilde 40 und Gegenschilde 48 verringert werden, wobei das Gegenschild 48 bevorzugt breiter ist als das Abziehschild 40, so dass mit dem Abziehschild 40 frei gegen das fest auf der Ofenbrücke 24 aufgelegte Gegenschild 40 gearbeitet werden kann, ohne das Schlacke 60' oder geschmolzenes Material aus dem Schmelzofen 14 hinausgelangen kann.

Es ist erkennbar, dass Entschlackung und Pressen in einem Arbeitsgang durchgeführt werden können, wodurch die Arbeitszeit beträchtlich verkürzt wird und die Einrichtung 10 zum Entschlacken dennoch nicht wesentlich komplexer ausgebildet werden muss, als bisher bestehende Einrichtungen, wie sie beispielhaft die DE 197 29 702 A1 zeigt.

Während die vorbekannten Methoden ausschließlich die Metallverluste reduzieren nachdem die Schlacke den Schmelzprozess bereits verlassen hat, wird erfindungsgemäß die Schlacke 60 noch vor dem Erkalten im Schmelzofen 14 ausgepresst, wodurch schon der Erstanfall der Metallverluste reduziert wird. Dabei fließt ein wesentlicher Metallanteil der Schlacke 60 in den Schmelzofen 14 zurück, so dass dieser Anteil nicht aufbereitet und erneut eingeschmolzen werden muss. Weiterhin kühlt die Schlacke 60 schon während des Pressvorgangs ab und somit werden weitere Metallverluste durch Schlackebrände reduziert.

Durch diese Maßnahmen kann der Metallgehalt der Schlacke 60' durch das Auspressen im Schmelzofen 14 um etwa 50 % reduziert werden. Dieses Metall verbleibt im Prozess.

Vorteilhaft sind die Mittel zum Pressen für eine Presskraft von 20 kN, ggf. auch mehr, ausgelegt, wobei bei größeren Flächen und Gegenflächen von Abziehschild 40 und Gegenschild 48 auch größere Presskräfte verwendet werden können.

Die Material sind entsprechend auszulegen, wobei für das Abziehschild 40 und das Gegenschild 48 bevorzugt ein hitzefester Stahlgusswerkstoff, wie er auch für den Schlackebehälter 54 verwendet wird, eingesetzt wird. Es können allerdings auch geschweißte oder geschmiedete Schilde 40, 48 eingesetzt werden. Die Schilde 40, 48 können auch Titan umfassen.

Auch wenn die Erfindung im Wesentlichen im Zusammenhang mit der Aluminiumherstellung aus Recyclingmaterial erläutert wurde, ist die Erfindung nicht darauf beschränkt, sondern es können auch andere Metalle und Legierungen bearbeitet und es können auch Erze zu deren Herstellung verwendet werden.

Aus der vorstehenden Darstellung ist deutlich geworden, dass mit der vorliegenden Erfindung ein Verfahren und eine Einrichtung 10 zur Entschlackung bereitgestellt werden, mit denen sowohl die Entschlackung als auch die Metallrückgewinnung aus der Schlacke 60 schnell und einfach erfolgen kann und die Gefahr von Schlackebränden reduziert wird. Soweit nichts anders angegeben ist, können sämtliche Merkmale der vorliegenden Erfindung frei miteinander kombiniert werden. Auch die in der Figurenbeschreibung beschriebenen Merkmale können, soweit nichts anderes angegeben ist, als Merkmale der Erfindung frei mit den übrigen Merkmalen kombiniert werden. Eine Beschränkung einzelner Merkmale des Ausführungsbeispiels auf die Kombination mit anderen Merkmalen des Ausführungsbeispiels ist dabei ausdrücklich nicht vorgesehen, diese einzelnen Merkmale können selbständig zur Kombination mit anderen Merkmalen, insbesondere im Anspruchssatz angegebenen Merkmalen verwendet werden. Außerdem können gegenständliche Merkmale umformuliert auch als Verfahrensmerkmale Verwendung finden und Verfahrensmerkmale umformuliert als gegenständliche Merkmale. Eine solche Umformulierung ist somit automatisch mit offenbart. Die Erfindung ist in den beigefügten Ansprüchen definiert.

### Bezugszeichenliste

- 10: erfindungsgemäße Einrichtung zum Entschlacken
- 12: Schmelze
- 14: Schmelzofen
- 16: Ofentür
- 18: Schmelzbereich
- 20: Chargieröffnung
- 22: Ofenrampe
- 24: Ofenbrücke
- 26: Schienen
- 28: verfahrbare Basis der Einrichtung 10
- 30: Steueranlagen
- 32: Bedienstand
- 34: Hitzeabschirmung
- 36: Mittel zum Abziehen
- 38: teleskopierbarer Mast bzw. Ausleger
- 40: Abziehschild
- 42: erste steuerbare Mittel
- 44: zweite steuerbare Mittel
- 46: Mittel zum Pressen
- 48: Gegenschild
- 50: teleskopierbarer Arm
- 52: Parallelogrammführung für Arm 50
- 54: steuerbare Mittel
- 56: steuerbare Mittel
- 58: Baum
- 60: Schlacke
- 60': Anteile der Schlacke 60
- 62: Schlackebehälter, Kübel
- 64: Ableitmittel
- 66: Pressfläche des Abziehschildes 40
- 68: Pressfläche des Gegenschildes 48
- 69: Leitungen für Druckluft zur Kühlung
- 70: Oberflächenstruktur der Pressfläche 66 des Abziehschildes 40
- 72: Erhöhungen
- 74: Senken
- 76: Durchbrechungen in der Pressfläche 66
- 78: Oberflächenstruktur der Pressfläche 68 des Gegenschildes 48
- 80: Senken
- 82: Erhöhungen

## Patentansprüche

1. Verfahren zum Entschlacken metallurgischer Schmelzen (12) eines Schmelzofens (14), wobei die Schlacke (60, 60') von der Schmelze (12) abgezogen wird, wobei die Schlacke (60, 60') vor dem Überführen in einen Schlackebehälter (62) gepresst wird, **dadurch gekennzeichnet, dass** separat von dem Schmelzofen (14) eine Einrichtung (10) zum Entschlacken metallurgischer Schmelzen (12) besteht, wobei eine Abziehvorrichtung (36) und ein Gegenlager (48) bestehen, die Teil der Einrichtung (10) zum Entschlacken metallurgischer Schmelzen (12) sind, wobei die Schlacke (60, 60') durch die Abziehvorrichtung (36) abgezogen und zwischen der Abziehvorrichtung (36) und dem Gegenlager (48) gepresst wird.

2. Verfahren nach Anspruch 1, **dadurch gekennzeichnet, dass** das Gegenlager (48) bevorzugt verschiebbar ausgebildet ist.

3. Verfahren nach einem der vorherigen Ansprüche, **dadurch gekennzeichnet, dass** beim Pressen aus der Schlacke (60') austretendes geschmolzenes Material der Schmelze (12) zugeführt wird.

4. Verfahren nach einem der vorherigen Ansprüche, **dadurch gekennzeichnet, dass** die Schlacke (60') beim Auspressen auf einer Brücke (24) eines Schmelzofens (14) aufliegt, wobei der Pressvorgang bevorzugt unmittelbar nach Abziehen der Schlacke (60') auf die Brücke (24) begonnen wird.

5. Einrichtung (10) zum Entschlacken metallurgischer Schmelzen (12) eines Schmelzofens (14), wobei die Einrichtung (10) angepasst ist, Schlacke (60, 60') von der Schmelze (12) abzuziehen, wobei die Einrichtung (10) Mittel (36) zum Abziehen der Schlacke (60, 60') von der Schmelze (12) aufweist, wobei die Einrichtung (10) Mittel (46) zum Pressen aufweist, die angepasst sind, die Schlacke (60') vor dem Überführen in einen Schlackebehälter (62) zu pressen, **dadurch gekennzeichnet, dass** die Einrichtung (10) separat von dem Schmelzofen (14) besteht und ein Gegenlager (48) als Teil der Einrichtung (10) so besteht, dass die Schlacke (60, 60') zwischen den Mittel (36) zum Abziehen der Schlacke (60, 60') und einem Gegenlager (48) auspressbar ist.

6. Einrichtung (10) nach Anspruch 5, **dadurch gekennzeichnet, dass** die Einrichtung (10) angepasst ist, das Verfahren nach einem der Ansprüche 1 bis 4 auszuführen und/oder dass die Mittel (36) zum Abziehen Teil der Mittel (46) zum Pressen sind.

7. Einrichtung (10) nach einem der Ansprüche 5 oder 6, **dadurch gekennzeichnet, dass** die Mittel (36) zum Abziehen ein Abziehschild (40) aufweisen, dem ein Gegenschild (48) zugeordnet ist, so dass die Schlacke (60') zwischen Abziehschild (40) und Gegenschild (48) auspressbar ist.

8. Einrichtung (10) nach Anspruch 7, **dadurch gekennzeichnet, dass** das Abziehschild (40) und das Gegenschild (48) jeweils Unterkanten aufweisen, wobei die Unterkante des Abziehschildes (40) beim Pressen in gleicher Höhe oder oberhalb der Unterkante des Gegenschildes (48) angeordnet ist, so dass aus der Schlacke (60') austretendes geschmolzenes Material unter dem Abziehschild (40) abgeleitet wird.

9. Einrichtung (10) nach einem der Ansprüche 5 bis 8, **dadurch gekennzeichnet, dass** die Mittel (46) zum Pressen zumindest auf einer der Flächen, die die Schlacke (60') zwischen sich pressen, ein oder mehrere Führungen zum Ableiten des aus der Schlacke (60') austretenden geschmolzenen Materials aufweist, wobei die Führungen bevorzugt als Durchbrechungen in der Fläche ausgebildet sind, wobei die Führungen insbesondere in dem Abziehschild (40) nach Anspruch 7 angeordnet sind.

10. Einrichtung (10) nach einem der Ansprüche 5 bis 9, **dadurch gekennzeichnet, dass** das Abziehschild (40) und/oder das Gegenschild (48) kühlbar ausgebildet sind.

11. Einrichtung nach einem der Ansprüche 5 bis 10, **dadurch gekennzeichnet, dass** die Mittel (46) zum Pressen Auswerfer zum Ablösen der Schlacke (60') von den Mitteln (36) zum Pressen aufweisen, wobei die Auswerfer bevorzugt als Stößel ausgebildet sind, die insbesondere an dem Abziehschild (40) und/oder dem Gegenschild (48) nach Anspruch 7 angeordnet sind.

## Claims

1. Method for removing slag from metallurgical melts (12) of a melting furnace (14), wherein the slag (60, 60') is drawn off from the melt (12), wherein the slag (60, 60') is pressed before being transferred into a slag container (62), **characterized in that** separate from the melting furnace (14) is a device (10) for removing slag from metallurgical melts (12), comprising a extractor device (36) and a counter bearing (48), which are part of the device (10) for removing slag from metallurgical melts (12), wherein the slag (60, 60') is removed by the extractor device (36) and is pressed between the extractor device (36) and a counter-bearing (48).

2. Method according to claim 1, **characterized in that** the counter-bearing (48) is formed to be displaceable.

3. Method according to one of the preceding claims, **characterized in that** molten material emerging from the slag (60') during pressing is fed to the melt (12).

4. Method according to one of the preceding claims, **characterized in that** the slag (60') rests on a bridge (24) of a melting furnace (14) during pressing out, wherein the pressing process is preferably started immediately after the slag (60') has been drawn off onto the bridge (24).

5. Installation (10) for removing slag from metallurgical melts (12), wherein the installation (10) is adapted to withdraw slag (60, 60') from the melt (12), wherein the installation (10) comprises means (36) for extracting the slag (60, 60') from the melt (12), wherein the installation (10) comprises means (46) for pressing that are adapted to press the slag (60') before transferring it to a slag container (62), **characterized in that** the device (10) is separate from the melting furnace (14) and a counter bearing (48) is provided as part of the device (10) such that the slag (60, 60') can be pressed out between the means (36) for removing the slag (60, 60') and a counter bearing (48).

6. Installation (10) according to claim 5, **characterized in that** the installation (10) is adapted to perform the method according to one of the claims 1 to 4 and/or that the means (36) for extracting are part of the means (46) for pressing.

7. Installation (10) according to one of the claims 5 or 6, **characterized in that** the means (36) for extracting comprise a draw-off blade (40) to which a counter-blade (48) is assigned, such that the slag (60') can be pressed out between the draw-off blade (40) and the counter-blade (48).

8. Installation (10) according to claim 7, **characterized in that** the draw-off blade (40) and the counter-blade (48) each have lower edges, wherein the lower edge of the draw-off blade (40) is arranged at the same height as or above the lower edge of the counter-blade (48) during pressing, such that molten material emerging from the slag (60') is discharged under the draw-off blade (40).

9. Installation (10) according to one of the claims 5 to 8, **characterized in that** the means (46) for pressing have, at least on one of the surfaces pressing the slag (60') between them, one or more guides for diverting the molten material emerging from the slag (60'), wherein the guides are preferably formed as perforations in the surface, wherein the guides are arranged, in particular, in the draw-off blade (40) according to claim 7.

10. Installation (10) according to one of the claims 5 to 9, **characterized in that** the draw-off blade (40) and/or the counter-blade (48) are formed to be able to be cooled.

11. Installation according to one of the claims 5 to 10, **characterized in that** the means (46) for pressing have ejectors for detaching the slag (60') from the means (36) for pressing, wherein the ejectors are preferably formed as plungers, which are arranged in particular on the draw-off blade (40) and/or the counter-blade (48) according to claim 7.

## Revendications

1. Procédé de décrassage de bains métallurgiques en fusion (12) d'un four de fusion (14), la scorie (60, 60') étant retirée du bain en fusion (12), la scorie (60, 60') étant comprimée avant son transfert dans un récipient à scories (62), **caractérisé en ce qu'**il existe, séparément du four de fusion (14), un dispositif (10) de décrassage de bains métallurgiques en fusion (12), un dispositif de retrait (36) et une butée (48) étant prévus, lesquels font partie du dispositif (10) de décrassage de bains métallurgiques en fusion (12), la scorie (60, 60') étant retirée au moyen du dispositif de retrait (36) et comprimée entre le dispositif de retrait (36) et la butée (48).

2. Procédé selon la revendication 1, **caractérisé en ce que** la butée (48) est réalisée de manière préférentiellement déplaçable.

3. Procédé selon l'une des revendications précédentes, **caractérisé en ce que**, lors de la compression, le matériau fondu s'échappant de la scorie (60') est amené dans le bain en fusion (12).

4. Procédé selon l'une des revendications précédentes, **caractérisé en ce que** la scorie (60') prend appui, lors de l'expression, sur un pont (24) d'un four de fusion (14), le processus de compression étant de préférence commencé immédiatement après le retrait de la scorie (60') sur le pont (24).

5. Dispositif (10) de décrassage de bains métallurgiques en fusion (12) d'un four de fusion (14), le dispositif (10) étant adapté pour retirer la scorie (60, 60') du bain en fusion (12), le dispositif (10) présentant des moyens (36) pour retirer la scorie (60, 60') du bain en fusion (12), le dispositif (10) présentant des moyens (46) de compression, qui sont adaptés pour comprimer la scorie (60') avant son transfert dans un récipient à scories (62), **caractérisé en ce que** le dispositif (10) existe séparément du four de fusion (14) et qu'une butée (48), en tant que partie du dispositif (10), est prévue de telle manière que la scorie (60, 60') puisse être exprimée entre les moyens (36) de retrait de la scorie (60, 60') et une butée (48).

6. Dispositif (10) selon la revendication 5, **caractérisé en ce que** le dispositif (10) est adapté pour mettre en œuvre le procédé selon l'une des revendications 1 à 4 et/ou **en ce que** les moyens (36) de retrait font partie des moyens (46) de compression.

7. Dispositif (10) selon l'une des revendications 5 ou 6, **caractérisé en ce que** les moyens (36) de retrait comportent un bouclier de retrait (40), auquel est associé un contre-bouclier (48), de sorte que la scorie (60') puisse être exprimée entre le bouclier de retrait (40) et le contre-bouclier (48).

8. Dispositif (10) selon la revendication 7, **caractérisé en ce que** le bouclier de retrait (40) et le contre-bouclier (48) présentent chacun des bords inférieurs, le bord inférieur du bouclier de retrait (40) étant disposé, lors de la compression, à la même hauteur que le bord inférieur du contre-bouclier (48) ou au-dessus de celui-ci, de sorte que le matériau fondu s'échappant de la scorie (60') est évacué sous le bouclier de retrait (40).

9. Dispositif (10) selon l'une des revendications 5 à 8, **caractérisé en ce que** les moyens (46) de compression présentent, sur au moins l'une des surfaces qui compriment entre elles la scorie (60'), un ou plusieurs guides pour évacuer le matériau fondu s'échappant de la scorie (60'), les guides étant de préférence réalisés sous forme d'ouvertures dans la surface, les guides étant notamment disposés dans le bouclier de retrait (40) selon la revendication 7.

10. Dispositif (10) selon l'une des revendications 5 à 9, **caractérisé en ce que** le bouclier de retrait (40) et/ou le contre-bouclier (48) sont réalisés de manière à pouvoir être refroidis.

11. Dispositif selon l'une des revendications 5 à 10, **caractérisé en ce que** les moyens (46) de compression comportent des éjecteurs destinés à décoller la scorie (60') des moyens (36) de compression, les éjecteurs étant de préférence réalisés sous forme de poussoirs, qui sont notamment disposés sur le bouclier de retrait (40) et/ou le contre-bouclier (48) selon la revendication 7.
